# EUROPEAN PATENT APPLICATION

(11) **EP 4 517 651 A1**
(43) Date of publication of application: **05.03.2025**
(21) Application number: 23794957.3
(22) Date of filing: 31.03.2023
(51) Int. Cl.: G06T 5/50, G06T 7/11, G06T 7/194, G06T 7/70, H04N 21/44

(54) **VIDEO SYNTHESIS METHOD AND APPARATUS, DEVICE, MEDIUM, AND PRODUCT**

(30) Priority: 29.04.2022 CN 202210476242
(71) Applicant: Beijing Zitiao Network Technology Co., Ltd., Beijing 100190 (CN)
(72) Inventor: YANG, Kunao, Beijing 100028 (CN); WANG, Jie, Beijing 100028 (CN); GAO, Jing, Beijing 100028 (CN); LI, Qiuting, Beijing 100028 (CN)
(74) Representative: Dentons UK and Middle East LLP
(86) International application number: PCT/CN2023/085796
(87) International publication number: WO 2023/207522

(57) **Abstract**

Embodiments of the present disclosure provide a video synthesis method, apparatus, device, medium, and product. The method comprises: obtaining a region image corresponding to a target object and a background image excluding the region image by performing an image segmentation on an image frame in a video to be processed; determining a mirror image corresponding to the region image; obtaining at least one first extended image by extending the region image in a first extension direction, the at least one first extended image comprising the region image; obtaining at least one second extended image by extending the mirror image in a second extension direction, the first extension direction being different from the second extension direction; obtain a target rendered image by rendering the background image, the at least one second extended image and the at least one first extended image, the target rendered image being the image obtained at the end of the rendering; obtaining a target video corresponding to the video to be processed by performing a video synthesis on the target rendered image corresponding to the image frame. By detecting and extending video images, the problem of a single video processing mode is solved.

## Description

### CROSS REFERENCE

This application claims priority to Chinese Patent Application No. 2022104762422, filed with the Chinese Patent Office on April 29, 2022 and entitled "VIDEO SYNTHESIS METHOD, APPARATUS, DEVICE, MEDIUM", AND PRODUCT', which is incorporated herein by reference in its entirety.

### FIELD

Embodiments of the present disclosure relate to the field of computer technologies, and in particular, to a video synthesis method, apparatus, device, medium, and product.

### BACKGROUND

With the rapid development of the video field, there are increasing demands for increasing interestingness of the video in the video playing field such as short video and live video. Especially in a video real-time collection scenario, most of current video processing manners are adding interesting content such as bullet-screens/one-liners and stickers into a video.

However, existing means for improving the interests of a video has a relatively simple processing manner for the video and is not rich enough, resulting in a low propagation speed and a low utilization rate of the video.

### SUMMARY

Embodiments of the present disclosure provide a video synthesis method, apparatus, device, medium, and product for clone video synthesis, so as to overcome a technical problem in the prior art that a video processing manner is relatively simple.

According to a first aspect, embodiments of the present disclosure provide a video synthesis method, comprising:
obtaining a region image corresponding to a target object and a background image excluding the region image by performing an image segmentation on an image frame in a video to be processed;
determining a mirror image corresponding to the region image;
obtaining at least one first extended image by extending the region image in a first extension direction, the at least one first extended image comprising the region image;
obtaining at least one second extended image by extending the mirror image in a second extension direction, the first extension direction being different from the second extension direction;
obtaining a target rendered image by rendering the background image, the at least one second extended image and the at least one first extended image, the target rendered image being the image obtained at the end of the rendering;
obtaining a target video corresponding to the video to be processed by performing a video synthesis on the target rendered image corresponding to the image frame.

According to a second aspect, embodiments of the present disclosure provide an apparatus for video synthesis, comprising:
an image segmentation unit configured for obtaining a region image corresponding to a target object and a background image excluding the region image by performing an image segmentation on an image frame in a video to be processed;
a mirror processing unit configured for determining a mirror image corresponding to the region image ;
a first extending unit configured for obtaining at least one first extended image by extending the region image in a first extension direction, the at least one first extended image comprising the region image;
a second extending unit configured for obtaining at least one second extended image by extending the mirror image in a second extension direction, the first extension direction being different from the second extension direction;
an image rendering unit configured for obtaining a target rendered image by rendering the background image, the at least one second extended image and the at least one first extended image, the target rendered image being the image obtained at the end of the rendering;
a video synthesis unit configured for obtaining a target video corresponding to the video to be processed by performing a video synthesis on the target rendered image corresponding to the image frame.

According to a third aspect, embodiments of the present disclosure provide an electronic device, comprising: a processor and a memory;
the memory storing computer execution instructions;
the processor executing the computer execution instructions stored in the memory to cause the processor to perform the video synthesis method according to the first aspect and various possible designs of the first aspect.

According to a fourth aspect, embodiments of the present disclosure provide a computer readable storage medium. The computer readable storage medium stores computer execution instructions. When a processor executes the computer execution instructions, the video synthesis method according to the first aspect and various possible designs of the first aspect are implemented.

According to a fifth aspect, embodiments of the present disclosure provide a computer program product, comprising a computer program. When being executed by a processor, the computer program implements the video synthesizing method according to the first aspect and various possible designs of the first aspect.

According to a sixth aspect, embodiments of the present disclosure further provides a computer program. When being run by a processor, the computer program implements the video synthesis method of the first aspect and various possible designs of the first aspect.

### BRIEF DESCRIPTION OF THE DRAWINGS

In order to more clearly illustrate technical solutions in embodiments of the disclosure or the prior art, a brief introduction of drawings required to be used in the description of embodiments or the prior art is given below. It is obvious that the drawings in the description below are some embodiments of the disclosure. For ordinary skilled persons in the art, other drawings may also be obtained according to these drawings without creative efforts.
FIG. 1 is a schematic diagram of a method for clone video synthesis according to embodiments of the present disclosure;
FIG. 2 is a flowchart of a video synthesis method according to embodiments of the present disclosure;
FIG. 3 is an example diagram of a mirror image according to embodiments of the present disclosure;
FIG. 4 is a flowchart of a video synthesis method according to other embodiments of the present disclosure;
FIG. 5 is an example diagram of one displacement point according to embodiments of the present disclosure;
FIG. 6 is a flowchart of a video synthesis method according to other embodiments of the present disclosure;
FIG. 7 is an example diagram of a target rendered image according to embodiments of the present disclosure;
FIG. 8 is a flowchart of a video synthesis method according to other embodiments of the present disclosure;
FIG. 9 is a schematic diagram of a structure of an apparatus for video synthesis according to embodiments of the present disclosure;
FIG. 10 is a schematic diagram of a hardware structure of an electronic device according to an embodiment of the present disclosure.

### DETAILED DESCRIPTION

In order to make the purpose, technical scheme and advantages of the disclosure clearer, the technical scheme in the disclosure will be clearly and completely described below in conjunction with the drawings of the disclosure. Obviously, described embodiments are a part of embodiments of the disclosure, not entire embodiments. Based on embodiments in the disclosure, all other embodiments obtained by ordinary skilled persons in the field without creative efforts fall within the scope of protection of the disclosure.

The technical solution of the present disclosure can be applied in the field of videos. Rendered images can be obtained by performing a separate extraction, extension, and rendering on videos, and videos are synthesized using rendered images of various video frames. In this process, the extraction from image frames to image segmentation, image extension, and rendering synthesis can be automatically completed to obtain clone videos when the rendering ends, thereby improving the display efficiency of clone videos.

In the related art, real-time processing requirements of various live videos and short videos for videos are relatively high. Currently, a relatively common video real-time processing manner is generally to add content such as bullet screens and stickers to a video, so as to improve the interestingness of video playing. However, this processing manner is relatively simple, and the improvement of the propagation speed and the recommendation speed of the video is not high.

In order to solve the described technical problem, the present disclosure considers increasing the number of objects in a motion state in a video, so as to increase the interestingness of the video. Therefore, it is considered to automatically split each frame image, and then the split video frames are synthesized into the target video. In order to obtain a clone image, a region image and a mirror image of a target object may be extended in different directions, and then the extended image is uniformly rendered to obtain a corresponding target rendered image. By means of this method, objects in an image can be divided to use video synthesis, thereby improving the video synthesis efficiency and interestingness, and playing rate of a video is promoted.

In embodiments of the present disclosure, an image frame in a video to be processed is segmented to obtain a region image and a background image where a target object is located. The region image is extended in a first extension direction and the mirror image is extended in a second extension direction, to obtain at least one first extended image and at least one second extended image. A target rendered image with a target object clone is obtained by rendering the at least one first extended image and the at least one second extended image and the background image. The target rendered image is obtained by rendering the background image, the at least one second extended image and the at least one first extended image, and can present a forward clone and a reverse clone, thereby improving the display efficiency of the image. Video synthesis is performed on the target rendered image corresponding to the image frame to obtain a target video of the video to be processed. By automatically completing image rendering and automatic synthesis of the target video, the acquisition efficiency and precision of the video can be improved, and the playback amount and playback speed of the target video can be ensured to be effectively improved.

The technical solution of the present disclosure and how to solve the above technical problem will be described in detail below with reference to specific embodiments. Several particular embodiments may be combined with each other, and the same or similar concepts or processes may not be repeated in certain embodiments. Hereinafter, embodiments of the present invention will be described in detail with reference to the accompanying drawings.

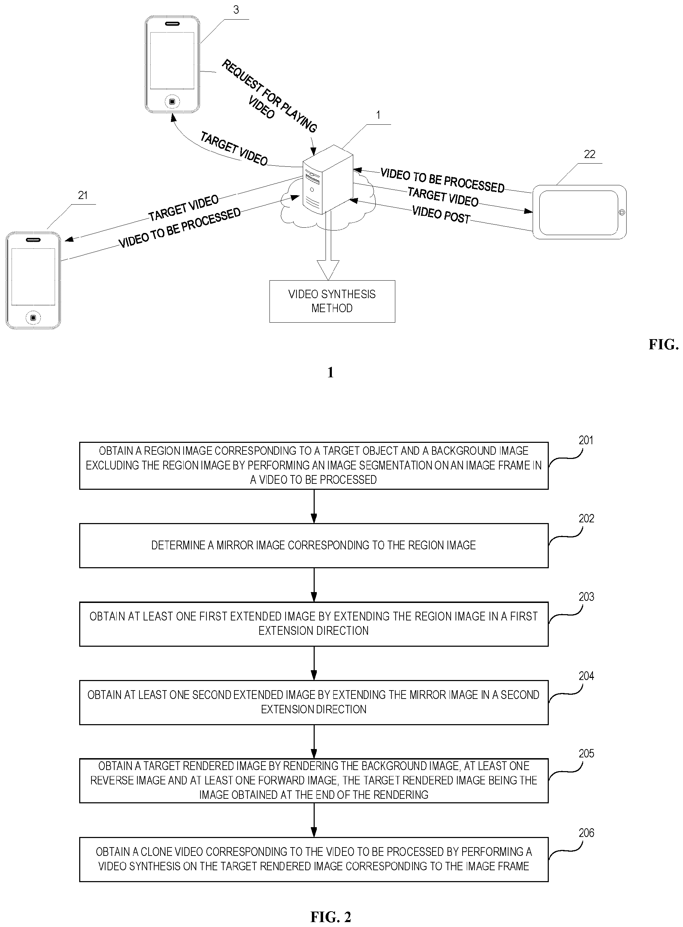

FIG. 1 is a schematic diagram of an application of a video synthesis method according to the present disclosure. The schematic diagram of the application according to embodiments of the present disclosure may include an electronic device and a user terminal that is connected to the electronic device through a local area network or a wide area network, It is assumed that the electronic device may be a server, such as a personal computer, a common server, a super personal computer, or a cloud server. The present disclosure does not limit the specific type of the electronic device. The user terminal may be, for example, a terminal device such as a mobile phone, a tablet computer, a personal computer, an intelligent appliance, or a wearable device, and the present disclosure does not set a limit to the specific type of the client. As shown in FIG. 1, taking an example that an electronic device is a cloud server 1 and a user terminal 2 may be configured on a terminal device such as a mobile phone 21 or a tablet computer 22, any user terminals 2 may provide a video to be processed for the cloud server 1. The cloud server 1 may obtain the video to be processed sent by any one of the user terminals 2, and synthesize a target video based on the video synthesis method provided in embodiments of the present disclosure.

Then, the cloud server 1 may send the synthesized target video to the user terminal 2. In addition, in implementations, after the target video is confirmed to be post by the user terminal 2, the target video may be post. After the target video is post successfully, other user terminals 3, such as the mobile phone 3 shown in FIG. 1, may obtain the target video and play the target video. Certainly, in implementations, the target video may also be recommended to other user terminals 3, so as to improve the playing rate of the target video.

Referring to FIG. 2, FIG. 2 is a flowchart of a video synthesis method according to embodiments of the present disclosure. The method may be configured as an apparatus for video synthesis, and the apparatus for video synthesis may be located in an electronic device. The video synthesis method may comprise the following steps:
201: A region image corresponding to a target object and a background image excluding the region image is obtained by performing an image segmentation on an image frame in a video to be processed.

Optionally, the image frame may be obtained by sampling the video to be processed. In an actual application, the video to be processed may correspond to a frame rate ((Frame rate) = the number of frames (Frames)/time (Time), and a unit of the frame rate is frames per second (f/s, frames per second, fps)). When the video to be processed is sampled, a sampling frequency may be set to include the frame rate of the video to be processed. If the sampling frequency is set to be the same as the frame rate of the image frame, it can be ensured that each image frame in the video can be sampled, and image processing is performed by adopting the technical solution of the present disclosure to obtain a corresponding target rendered image.

Certainly, in an actual application, the sampling frequency of the video to be processed may also be set according to an actual requirement, and is not limited to be equal to a frame rate. The higher the sampling frequency is, the larger the number of image frames captured within a unit time is, and the lower the possibility of occurrence of discontinuous pictures is. The lower the sampling frequency is, the fewer the number of acquired images per unit time is, and the higher the possibility of discontinuous images occurring is.

The image frame may be obtained by sampling the video to be processed, the image frame may include at least one image frame, and each image frame may obtain a corresponding target rendered image through Steps 201 to 204.

The region image may be an image of a region where the contour of the target object is located, and may be an irregular image. The background image may be an image corresponding to other regions in the video to be processed excluding the contour of the target object.

Alternatively, the target object may include a movable object such as a human body, an object or an animal, and a common target object may include a person or an animal in a movement process, for example.

202: A mirror image corresponding to the region image is determined.

The mirror image can be obtained by performing a mirror inversion on the region image. The image content of the mirror image is the same as that of the region image, but its display direction is opposite.

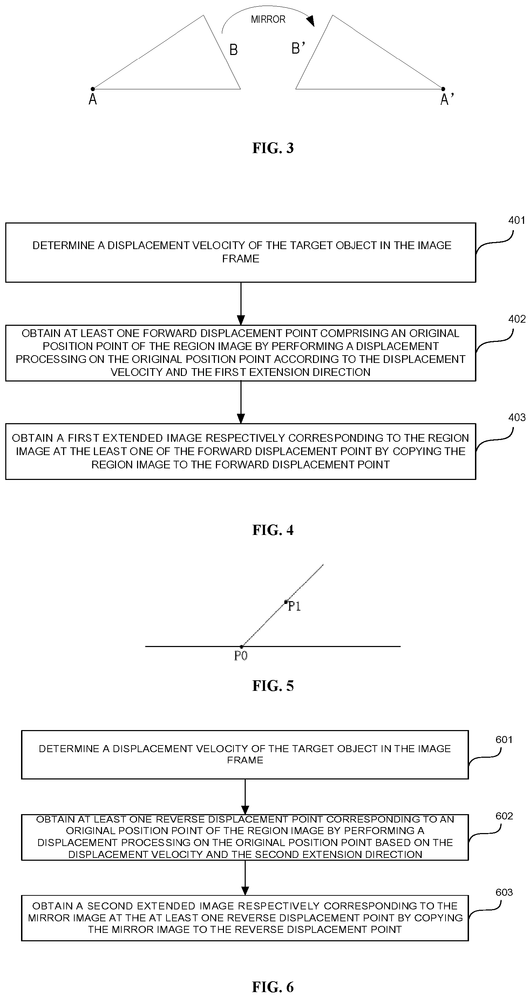

The mirror image may include any one of a horizontal mirror image, a vertical mirror image, or a diagonal mirror image. The horizontal mirror image refers to a mirror image exchange in which left and right portions of an image are centered on a vertical central axis of the image. The vertically mirror image may be a mirror image exchange in which upper and lower portions of the image are centered on a horizontal central axis of the image. In addition, a diagonal mirror image may be a mirror image exchange in which an image is split between an intersection point of a horizontal central axis and a vertical central axis of the image, which is equivalent to performing the horizontal mirroring and vertical mirroring on the image successively. For ease of understanding, referring to the triangle 301 shown in FIG. 3, the vertex A of the triangle 301 is on the left side of the side length B, and after the horizontal mirror image substitution 301, the vertex A' is on the right side of the side length B'.

203: At least one first extended image is obtained by extending the region image in a first extension direction. The at least one first extended image comprises the region image.

204: At least one second extended image is obtained by extending the mirror image in a second extension direction.

The first extension direction is different from the second extension direction.

In some embodiments, the first extension direction and the second extension direction may be opposite to each other, that is, the angle between the first extension direction and the second extension direction is 180 degrees. Certainly, the first extension direction and the second extension direction may also be determined based on two included angles formed by perpendicular lines of the horizontal lines, the perpendicular lines of the horizontal lines may serve as common sides of the two included angles, and directions directed by the other sides of the two included angles may be the first extension direction and the second extension direction, respectively. It is assumed that the two included angles are represented by an included angle A and an included angle B. In implementations, the angles of the included angle A and the included angle B may be equal or unequal, and the angle between the included angle A and the included angle B ranges from 0 degree to 180 degrees. When the included angle is 90 degrees, the first extension direction is opposite to the second extension direction, and when the included angle A is the same as the included angle B, the first extension direction is symmetrical to the second extension direction with respect to the perpendicular line of the horizontal line.

Optionally, taking the perpendicular line of the horizontal line as an example, the first extension direction may include a right side of the perpendicular line of the horizontal line, and the second extension direction may include a right side of the perpendicular line of the horizontal line. In an actual application, a horizontal line may include a horizontal line corresponding to a center point of a target object. For ease of understanding, by using an example in which an image is displayed on a display screen and a person views the image on the display screen, a left direction of the image on the display screen that can be viewed by human eyes may be a reverse direction, and a right direction of the image on the display screen that can be viewed by human eyes may be a forward direction. The forward direction and the reverse direction may specifically refer to left extension or right extension of the image. The region image may be extended in a first extension direction to the right to obtain at least one first extended image, and extended in a second extension direction to the left to obtain at least one second extended image.

205: A target rendered image is obtained by rendering the background image, the at least one second extended image and the at least one first extended image. The target rendered image is the image obtained at the end of the rendering.

Optionally, the target rendered image may be obtained by separately rendering a background image, the at least one second extended image, and the at least one first extended image, and may specifically include a rendered image obtained after a multi-layer rendering of the background image, the at least one second extended image, and the at least one first extended image ends.

206: A target video corresponding to the video to be processed is obtained by performing a video synthesis on the target rendered image corresponding to the image frame.

The target video may be obtained by synthesizing target rendered images corresponding to a plurality of image frames. When the target rendered image corresponding to an image frame is synthesized, the target rendered image corresponding to the image frame may be synthesized according to a time stamp of the image frame. The timestamp of the image frame is the timestamp of the corresponding target rendered image. In the video synthesis process, the frame rate of the target video can be determined according to the frame rate of the video to be processed, and the synthesizing time of the video can be accurately controlled according to the frame rate of the video.

According to embodiments of the present disclosure, an image frame in the video to be processed is segmented to obtain a region image and a background image where a target object is located. The region image and a mirror image of the region image are extended, to obtain at least one first extended image and at least one second extended image. A target rendered image with a target object clone by rendering the at least one first extended image and the at least one second extended image and the background image. The target rendered image is obtained by rendering the background image, the at least one second extended image and the at least one first extended image, and can present a forward clone and a reverse clone, thereby improving the display efficiency of the image. Subsequently, the video synthesis is performed on the target rendered image corresponding to the image frame to obtain a target video of the video to be processed. By automatically completing image rendering and automatic synthesis of the target video, the acquisition efficiency and precision of the video can be improved, and the playback amount and playback speed of the target video can be ensured to be effectively improved.

In addition, the video to be processed involved in the present disclosure may be collected in real time, and image frames are extracted from the videos collected in real time. Then, a region segmentation of a target object is performed on an image frame, so as to perform the mirror inversion on a region image obtained by means of segmentation, thereby realizing forward region image extension and mirror image extension and obtaining at least one first extended image and at least one second extended image. A target rendered image is obtained by rendering a background image excluding the region image, at least one first extended image and at least one second extended image. A synthesis of the video is performed using the target rendered image. This process is automatically completed without manual intervention, for example, operations such as manual copying of common drawing software. Video synthesis efficiency is high, which can solve the problem in the prior art that video synthesis efficiency is low when segmentation is manually completed.

In embodiments of the present disclosure, an image frame in a video to be processed is segmented to obtain a region image and a background image where a target object is located. An image extension is performed using the region image and a mirror image of the region image. Specifically, at least one first extended image is obtained by extending the region image in a first extension direction and at least one second extended image is obtained by extending the mirror image in a second extension direction. Cloning the target object can be achieved by extending images. A target rendered image with a target object clone is then obtained by rendering the at least one first extended image and the at least one second extended image and the background image. The target rendered image is obtained by rendering the background image, the at least one second extended image and the at least one first extended image, and can present extended images in the first extension direction and the second extension direction, thereby improving the display efficiency and interestingness of the image. Video synthesis is performed on the target rendered image corresponding to the image frame to obtain a target video of the video to be processed. By automatically completing image rendering and automatic synthesis of the target video, the acquisition efficiency and precision of the video can be improved, and the playback amount and playback speed of the target video can be ensured to be effectively improved.

In order to obtain an accurate first extended image, as shown in FIG. 4, which is a flowchart of another embodiment of a video synthesis method provided by embodiments of the present disclosure. The difference from other embodiments lies in that, in a first extension direction, region images are extended to obtain at least one first extended image, which may include:

401: A displacement velocity of a target object corresponding to an image frame is determined.

The displacement velocity may refer to a movement speed of the target object in the video to be processed. For example, if it is assumed that the target object moves from a position N when the video is being played to a position M when the video is played to a second frame of image, the displacement velocity of the target object may be obtained through a calculation according to a difference between the position N and the position M and time difference between two frames of images.

402: at least one forward displacement point comprising an original position point of the region image is obtained by performing a displacement processing on the original position point according to the displacement velocity and the first extension direction.

The region image may refer to marking pixel points, which belong to a target object, in the image frame to obtain pixel points of the region image in the image frame. The coordinate points of the pixel points corresponding to the region image may also be represented by a pixel coordinate system of the image frame. The pixel points that are not marked as the region image are the pixel points of the background image.

The original position point of the region image may refer to a pixel coordinate point corresponding to a key point of the target object in the image frame. A key point may refer to a pixel point capable of identifying the position of the region image, of which coordinates are represented by the pixel coordinate system of the entire image frame. The original position point may include, for example, a coordinate point of a center point of the region image in the image frame. For example, if the target object is a human body, the target object may also be a certain key position point in the human body, such as, coordinates of pixels of an eyebrow center point, a nose point, and a central point and the like. A position meaning corresponding to the original position point is not limited herein. Likewise, the forward direction displacement point may include a pixel coordinate point in the image frame obtained after the displacement of the original position point. The original position point and the forward displacement point may each include a coordinate point located in a pixel coordinate system of the image frame.

Alternatively, the first extension direction may include a positive displacement angle. The first extension direction may be determined by a trajectory of the target object within the video frame. For example, also taking moving from the N position to the M position as an example, an included angle may exist between lines connecting two positions with respect to a horizontal line or a vertical line, and the included angle is a forward displacement angle. Assuming that the forward displacement angle is 45 degrees as an example, when the target object is displaced, the target object may be moving along a straight line that is at an upper right corner and forms an angle of 45 degrees with the horizontal line, and the moving distance is calculated according to the displacement velocity to obtain a point, that is, a forward displacement point. For ease of understanding, as shown in FIG. 5, it is assumed that P0 is an original position point, P0 is displaced 45 degrees in a forward direction, and an obtained forward displacement point may be P1.

403: A first extended images respectively corresponding to the region image at the at least one forward displacement point is obtained by copying the region image to the forward displacement point.

Copying the region image to the forward displacement point can include moving a pixel value corresponding to a pixel point of the region image to a corresponding coordinate point according to a forward displacement point, i.e., according to the coordinate point and a forward displacement point of the region image in the image frame, determining a forward coordinate point of the first extended image in the image frame, and assigning a pixel value at the coordinate point in the region image to a corresponding forward coordinate point, that is, the first extended image formed by the pixel values corresponding to the forward coordinate points may be obtained. Certainly, in implementations, the region image may include a plurality of pixel points, and each pixel point may be moved one by one according to the forward displacement point to obtain the first extended image formed by the plurality of moved pixel points. In the first extended image, except that a coordinate value of a pixel point of the moved region image is true, coordinates of other pixel points are set to be a transparent attribute, and are all transparent when being displayed, so that there is no color, so as not to display and block other images, such as a background image.

The forward displacement point can include an original position point, that is, a first extended image corresponding to an original position point is generated without displacing a region image, which can ensure that the region image at the original position can be normally displayed. The coordinates of the pixel points of the first extended image corresponding to the original position point do not change.

According to embodiments of the present disclosure, at least one accurate forward displacement point can be obtained by obtaining a displacement velocity of a target object and performing a forward displacement on the basis of an original position point of the target object. By means of at least one forward displacement point, a region image is confirmed according to the forward displacement point, so as to obtain a first extended image corresponding to the forward displacement point, thereby improving the positioning accuracy of the first extended image, and obtaining a first extended image respectively corresponding to at least one forward displacement point with higher positioning accuracy.

In a possible design, based on an original position point of the region image, performing a displacement processing according to a displacement velocity and a first extension direction, so as to obtain at least one forward displacement point including the original position point may include:
determining a region width of the region image and an image width of the image frame.
computing, based on the region width and the image width and the displacement velocity, the number of forward displacements and a forward offset step size of the region image in the first extension direction.
determining, based on the original position point of the region image, at least one forward position point according to the forward offset step size and the number of forward displacements, to obtain the at least one forward displacement point constructed by the original position point and the at least one forward position point.

Alternatively, the region width of the region image may refer to a horizontal width of the object contour region, and the image width may also refer to a horizontal width of the image frame.

The amount of forward displacement can be obtained by calculation automatically according to the width of the region and the width of the image, for example, a quotient of half the width of the image and the width of the region can be calculated, and then the obtained result is rounded to obtain the amount of forward displacement. However, in implementations, the number of forward displacements may also be preset and obtained, for example, may be set by an operation and maintenance person or a front-end user using the video synthesis method. In a relatively common scenario, the number of forward displacements may be set to 3.

The forward offset step size may be determined according to the quotient of the half of the image width, a width difference value of the region width, and the number of forward displacements, and by using the displacement velocity as a constraint condition. Generally, the quotient of the width difference value and the number of forward displacements can be calculated, and an initial forward offset step size can be obtained by rounding the quotient. If the displacement velocity is greater than a certain threshold value, the step size decreases; and if the displacement velocity is less than a certain threshold value, the step size increases.

In embodiments of the present disclosure, when the forward displacement point is determined, the number of forward displacements and the forward offset step size in the first extension direction can be accurately calculated according to the region width of the region image and the image width of the image frame. The forward position point can be accurately positioned by means of the number of forward displacements and the forward offset step size, so that a forward displacement point with higher position accuracy is obtained.

In order to obtain an accurate second extended image, as shown in FIG. 6, which is a flowchart of another embodiment of a video synthesis method provided by embodiments of the present disclosure. The difference from other embodiments lies in that, an extension processing is performed on a mirror image in a second extension direction to obtain at least one second extended image, including:
601: A displacement velocity of the target object in the image frame is determined.

Some steps in this embodiment are the same as those in other embodiments, and are not further described herein.

602: At least one reverse displacement point corresponding to an original position point of the region image is obtained by performing a displacement processing on the original position point based on the displacement velocity and the second extension direction.

The region image may refer to marking pixel points, which belong to a target object, in the image frame to obtain pixel points of the region image in the image frame, and the coordinate points of the pixel points corresponding to the region image may also be represented by a pixel coordinate system of the image frame. The pixel points that are not marked as the region image are the pixel points of the background image.

The original position point of the region image may refer to a pixel coordinate point corresponding to the key point of the target object in the image frame. A key point may refer to a pixel point capable of identifying the position of the region image, of which coordinates are represented by the pixel coordinate system of the entire image frame. The original position point may include, for example, a coordinate point of a center point of the region image in the image frame. For example, if the target object is a human body, the target object may also be a certain key position point in the human body, for example, coordinates of pixel points such as an eyebrow center point, a nose point, and a central point. A position meaning corresponding to the original position point is not limited herein. Likewise, the reverse displacement point may include a pixel coordinate in the image frame obtained after the displacement of the original position point. The original position point and the reverse displacement point may each include a coordinate point located in a pixel coordinate system of the image frame.

Alternatively, the second extension direction may include a reverse displacement angle. The second extension direction may be determined by a trajectory of the target object within the video frame. For example, also taking moving from the N position to the M position as an example, an included angle may exist between lines connecting two positions with respect to a horizontal line or a vertical line, and the included angle is a reverse displacement angle. The reverse displacement process is similar to the forward displacement process, and is not further described herein.

603: A second extended image respectively corresponding to the mirror image at the at least one reverse displacement point is obtained by copying the mirror image to the reverse displacement point.

Copying the region image to the reverse displacement point can include moving a pixel value corresponding to a pixel point of the region image to a corresponding coordinate point according to a reverse displacement point, i.e., according to the coordinate point and the reverse displacement point of the region image in the image frame, determining a reverse coordinate point of the second extended image in the image frame, and assigning a pixel value at the coordinate point in the region image to a corresponding reverse coordinate point, that is, the second extended image formed by the pixel values corresponding to the reverse coordinate points may be obtained. Certainly, in implementations, the pixel points of the region image may include a plurality of pixel points, and each pixel point may be moved one by one according to the reverse displacement point, so as to obtain the second extended image formed by a plurality of moved pixel points. In the second extended image, except that a coordinate value of a pixel point of the moved region image is true, coordinates of other pixel points are set to be a transparent attribute, and are all transparent when being displayed, so that there is no color, so as not to display and block other images, such as a background image.

In embodiments of the present disclosure, at least one accurate reverse displacement point can be obtained by obtaining the displacement velocity of the target object and performing a reverse displacement on the basis of the original position point of the target object. By means of at least one reverse displacement point, a region image is confirmed according to the reverse displacement point, so as to obtain a second extended image corresponding to the reverse displacement point, thereby improving the positioning accuracy of the second extended image, and obtaining a second extended image respectively corresponding to at least one reverse displacement point with higher positioning accuracy.

As one embodiment, based on the original position point of the region image, performing a displacement processing based on a displacement velocity and a second extension direction, so as to obtain at least one reverse displacement point corresponding to the original position point, may include:
determining a region width of the region image and an image width of the image frame;
computing, based on the region width and the image width and the displacement velocity, the number of reverse displacements and a reverse offset step size of the region image in the second extension direction;
determining, based on the original position point of the region image, at least one reverse position point according to the reverse offset step size and the number of reverse offsets, to obtain at least one reverse displacement point constructed by the at least one reverse position point.

Alternatively, the region width of the region image may refer to a horizontal width of the object contour region, and the image width may also refer to a horizontal width of the image frame.

The amount of reverse displacement can be obtained by calculation automatically according to the width of the region and the width of the image, for example, a quotient of half the width of the image and the width of the region can be calculated, and then the obtained result is rounded to obtain the amount of reverse displacement. However, in implementations, the number of reverse displacements may also be obtained in advance, for example, it may be set by an operation and maintenance person or set by a front-end user using the video synthesis method. In a relatively common scenario, the number of reverse displacements may be set to 3.

The reverse offset step size may be determined according to the quotient of the width difference between half of the image width and the region width and the reverse displacement amount, and by using the displacement velocity as a constraint condition. In general, the quotient of the width difference value and the number of the reverse displacements can be calculated, and the initial reverse offset step size can be obtained by rounding the quotient. If the displacement velocity is greater than a certain threshold, the step size decreases; and if the displacement velocity is less than a certain threshold, the step size increases.

In embodiments of the present disclosure, when the reverse displacement point is determined, the number of reverse displacements and the reverse offset step size in the second extension direction can be accurately calculated according to the region width of the region image and the image width of the image frame. The reverse position point can be accurately positioned by means of the number of reverse displacements and the reverse offset step size, so that a reverse displacement point with higher position accuracy is obtained.

As an embodiment, determining the displacement velocity corresponding to the target object in the image frame includes:
determining a previous image frame corresponding to the image frame in the video to be processed;
determining a first position of the target object in the previous image frame and a second position of the target object in the image frame;
computing an amount of displacement corresponding to the target object based on the first position and the second position;
computing the displacement velocity of the target object in the image frame using a display time interval of the image frame of the video to be processed and the amount of displacement.

Optionally, the calculating the amount of displacement corresponding to the target object according to the first position and the second position may include: determining a frame rate of the video to be processed; calculating a time interval between two image frames according to the frame rate of the video to be processed; and calculating a position difference value according to the first position and the second position. The position difference value may refer to an absolute difference value between the first position and the second position, and may specifically be obtained by performing a triangular calculation on a lateral displacement difference value and a longitudinal displacement difference value of two positions, that is, the lateral difference value and the longitudinal difference value are respectively used to coordinate two right-angled sides of a right-angled triangle, and the amount of displacement is the length of a bevel edge of the right-angled triangle. The quotient of the amount of displacement and the time interval may be the displacement velocity.

In embodiments of the present disclosure, by obtaining the first position where the target object is located in the previous image frame and the second position of the current image frame, the amount of displacement corresponding to the target object can be calculated by calculating the first position and the second position, and a displacement velocity of the target image can be accurately calculated by means of the amount of displacement and a time interval between two image frames. The displacement velocity of the target object can be accurately calculated by means of the amount of displacement and the time interval between two adjacent image frames, so as to obtain a high-precision displacement velocity.

In order to ensure the accuracy of image display, a user can normally view the target object. In a possible design, the step of rendering the background image, at least one second extended image and at least one first extended image to obtain the target rendered image at the end of the rendering may include:
obtaining the target rendered image at the end of the rendering by successively rendering the background image, the at least one first extended image, the at least one second extended image in an overlay way, with the background image in a first rendering order, the at least one second extended image in a second rendering order and the at least one first extended image in a third rendering order.

Optionally, the step of rendering the background image, the at least one second extended image and the at least one first extended image to obtain the target rendered image at the end of the rendering may include: separately rendering the background image, the at least one second extended image and the at least one first extended image to obtain the target rendered image at the end of the rendering. The target rendered image may be separately rendered from the background image, the at least one second extended image, and the at least one first extended image.

In embodiments of the present disclosure, a rendering order may be respectively set for a background image, at least one second extended image and at least one first extended image, so as to realize accurate rendering of the target rendered image, thereby avoiding the problem of image display overlapping caused by random rendering between images, and ensuring the effectiveness of display.

As a possible implementation, the obtaining the target rendered image at the end of the rendering by successively rendering the background image, the at least one first extended image, the at least one second extended image in an overlay way may include:
rendering the background image at a lowest layer;
determining reverse central distances which respectively correspond to the at least one second extended image and a center point of the background image ;
successively rendering the at least one second extended image in a descending order of the reverse central distances;
determining forward central distances which respectively correspond to the at least one first extended image and the center point of the background image ;
successively rendering the at least one first extended image in a descending order of the forward central distances until the end of rendering of a last first extended image, to obtain the target rendered image.

The reverse central distance between the second extended image and the center point of the inverse image may be obtained by calculating the reverse displacement point of the second extended image and the center point of the background image. Likewise, the forward central distance between the first extended image and the center point of the background image may be obtained by calculating the forward displacement point of the first extended image and the center point of the background image.

The target rendered image may be obtained by a multilayer rendering of the background image, at least one second extended image and at least one first extended image. Specifically, the background image may be rendered at a lowest layer, the second extended image is rendered at an upper layer of the background image, and the first extended image is rendered at an upper layer of the second extended image. There is also a rendering order in the rendering process of at least one second extended image, i.e., the second extended image with the maximum distance from the center point of the image is rendered first, and with the decreasing of the distance, the rendering order is closer to the rear. The rendering process of at least one first extended image is similar, that is, the first extended image with the maximum distance from the center point of the image is rendered first, and with the decreasing of the distance, the rendering order is closer to the rear .

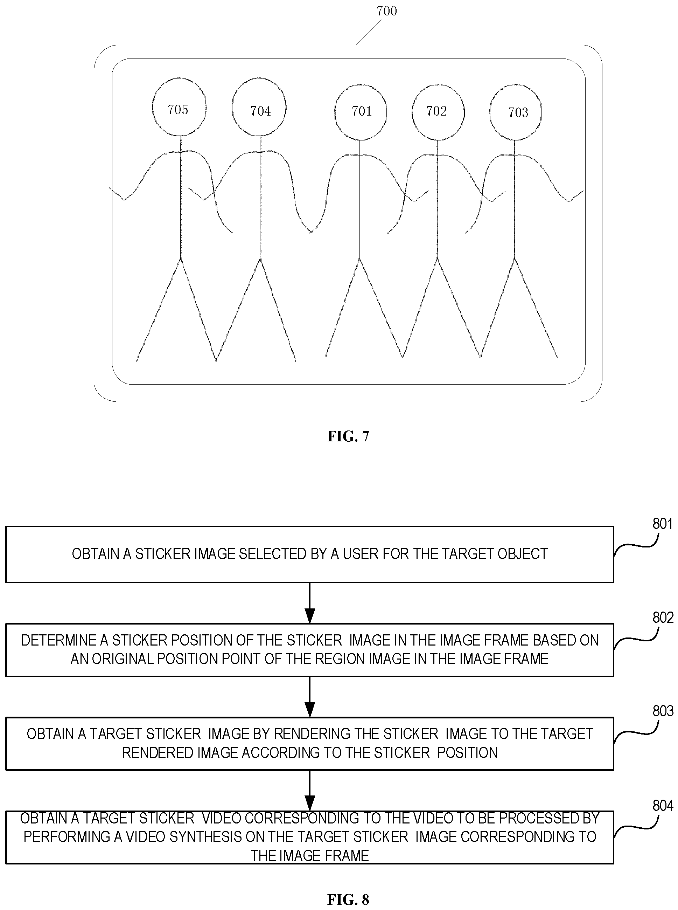

Certainly, another rendering order may also be used. For example, the at least one second extended image and at least one first extended image are rendered in the same batch, and are directly rendered according to distances to the center point. The rendering starts from an image corresponding to a maximum distance until rendering of the last first extended image ends. The first extended image includes a region image, and a position of the region image is the smallest from the center point. For ease of understanding, as shown in FIG. 7, assuming that the region image is 701, after the extension processing in the first extension direction and the extension processing in the second extension direction are performed on the region image, at least one first extended image displayed on the display screen 700 may be 701-703, and at least one second extended image may be 704-705 respectively.

In embodiments of the present disclosure, the background image is rendered at the lowest layer, so as to ensure normal display of the background image. The first extended image and the second extended image may be rendered at an upper layer of the background image. When the second extended image is being rendered, a reverse central distance and a forward central distance may be in a descending order, sequentially rendering the second extended image and the first extended image to an upper layer, so that a rendering layer of the image is related to the distance, The accurate rendering of an image is realized, and it is ensured that an region image can be rendered on the uppermost layer, so as to obtain a precisely rendered target rendered image.

FIG. 8 is a flowchart of a video synthesis method according to another embodiment of the present disclosure, In the video synthesis method, a sticker image can be set for the region image. With reference to FIG. 8, the background image, the at least one second extended image and the at least one first extended image are rendered. After obtaining the target rendered image at the end of the rendering, the video synthesis method in the present disclosure can further include:

801: A sticker image selected by a user for the target object is obtained.

802: A sticker position of the sticker image in the image frame is determined based on an original position point of the region image in the image frame.

803: A target sticker image is obtained by rendering the sticker image to the target rendered image according to the sticker position.

804: A target sticker video corresponding to the video to be processed is obtained by performing a video synthesis on the target sticker image corresponding to the image frame.

The sticker image may be specified by a user for providing the video to be processed, and may refer to a variety of stickers such as a cartoon image, a landscape image, and a big-headed photo. Of course, the position of the sticker can also be specified by the user, and the position of the sticker can be determined according to the original position point.

A position point of a head vertex in the region image may be determined based on the original position point of the region image in the image frame, and the position point of the head vertex is used as a sticker position.

In embodiments of the present disclosure, after the sticker image selected by the user for the target object is obtained, the sticker position of the sticker image in the image frame may be determined based on the original position point of the region image in the image frame. By determining the sticker pasting position, a target sticker is obtained by rendering a sticker image into the target rendered image according to the sticker pasting position. The video synthesis is performed on the target sticker image corresponding to the image frame, so that the target sticker target video corresponding to a video to be processed can be obtained. By means of sticker, the content of the target video can be more comprehensive, thereby improving the video display efficiency.

As an embodiment, performing the image segmentation on the image frame in the video to be processed to obtain the region image corresponding to the target object and the background image excluding the region image, includes:
extracting the image frame from the video to be processed;
identifying an object contour area of the target object in an image frame;
obtaining the region image corresponding to the object contour area and the background image excluding the region image by segmenting the image frame with the object contour area.

Alternatively, contour extraction algorithms may be employed to identify the object contour area of the target object in the image frame. The contour extraction algorithm may be a common contour extraction algorithm, and the specific type of the contour extraction algorithm is not limited in the present disclosure. The image segmentation may specifically refer to setting pixels surrounded by the object contour area as object identifications, and setting other pixels located outside the object contour area as background identifications. The pixel points of the region image and the background image can be distinguished by the identifications of the pixel points.

In embodiments of the present disclosure, the image frame can be extracted from the video to be processed, and the object contour area of the target object in the image frame is identified. The object contour area can be used for segmenting the image frame, so as to obtain an accurate region image of the object contour area and a background image. By means of image segmentation, the accurate segmentation of the image can be realized, and the accurate acquisition of the region image and the background image can be realized.

In one possible design, the method can further include:
obtaining the video to be processed based on a target video collection request triggered by a first user;
after the obtaining a target video corresponding to the video to be processed by performing a video synthesis on the target rendered image corresponding to the image frame, the method further comprising:
outputting the target video for the first user.

The video to be processed may be collected in real time, and may also be read from a stored video.

The outputting the target video for the first user may include outputting the target video for the first user by using an output apparatus or sending the target video to a user equipment corresponding to the first user, and outputting the target video by using an output apparatus in the user equipment.

In embodiments of the present disclosure, the video to be processed provided by a first user may be obtained, and after the target video is obtained, the target video may further be output for the first user. By means of interactive processing with a first user, the acquisition of the video to be processed and output of the target video can be realized, so as to provide the target video for the first user in a more efficient and more automated mode.

As an embodiment, after the outputting the target video for the first user, the method further includes:
detecting a post request for the target video triggered by the first user;
in response to the post request, posting the target video to a user video account of the first user for reading and playing by a second user equipment of a second user.

Alternatively, the electronic device may provide the first user with the post control of the target video. When the user equipment of the first user detects that the first user triggers the post control, the user equipment may send the post request to the electronic device. The electronic device may store the target video in a user video account of the first user in response to the post request, and may specifically store the target video, and establish a storage association between a video name or a video identifier of the target video and the account name of the first user. The user video account may correspond to a plurality of videos, and may include the target video. When the second user equipment needs to play the target video, identity videos are determined from the user video account of the first user, and the target video is sent to the second user equipment. The target video is played once, and the number of times of playing the target video increases accordingly.

In embodiments of the present disclosure, the post request triggered by the first user for the target video can be detected, and the target video is post to the user video account of the first user, where the target video can be read and played by the second user equipment of the second user. By controlling the post of the target video by the first user, the target video can be effectively post .

In some embodiments, detecting the target video collection request triggered by the first user to obtain video to be processed includes:
receiving the video to be processed sent by the first user equipment, the video to be processed being captured by the user equipment of the first user when the user triggers the target video collection request;
outputting the target video for the first user, including:
sending the target video to the first user equipment and controlling the first user equipment to play the target video.

Of course, in some embodiments, the electronic device can directly interact with the first user to collect the video to be processed, and synthesize the target video corresponding to the video to be processed based on the video synthesis method of the present disclosure, so as to complete the collection and processing of the video in the single electronic device, thereby improving the utilization rate of the electronic device.

In embodiments of the present disclosure, the video to be processed sent by a first user equipment may be received, and the video to be processed may be collected by the user equipment of the first user. By automatically generating a target video for a video frame of the video to be processed, the generated target video may be sent to the first user equipment, so as to feed back the target video to the first user equipment. The generation and output of the target video are separated, the processing pressure of the first user equipment is reduced, and the normal operation of the first user equipment is ensured. In addition, an electronic device with a stronger computational capability is used to complete the generation of the target video, so that the generation efficiency and stability of the target video are higher, and the generation efficiency and success rate of the target video are ensured.

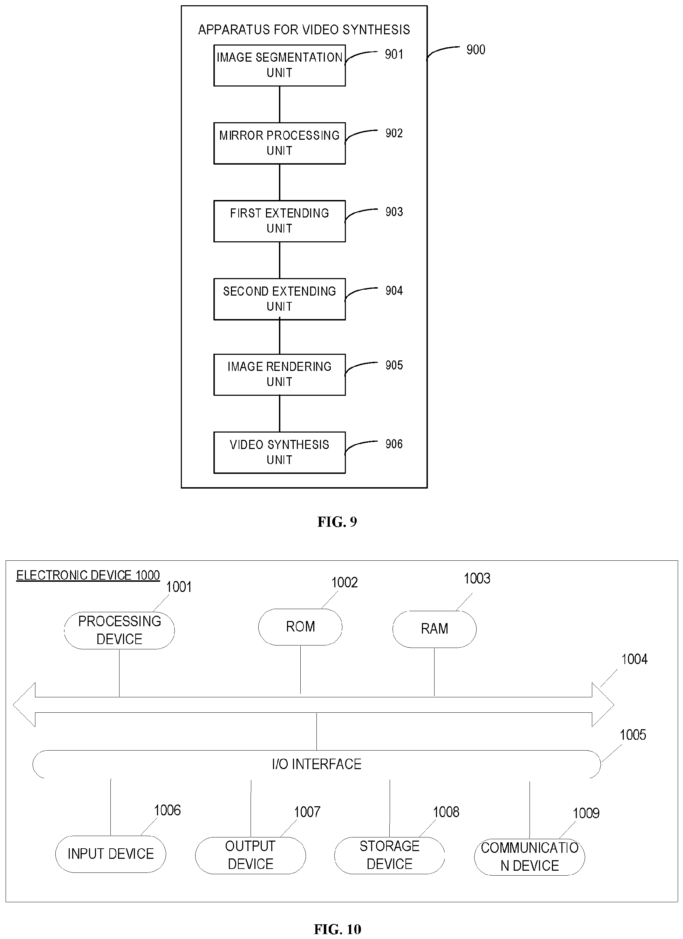

As shown in FIG. 9, which is a schematic structural diagram of an embodiment of an apparatus for video synthesis according to an embodiment of the present disclosure, the apparatus for video synthesis 900 may include:
an image segmentation unit 901 configured for obtaining a region image corresponding to a target object and a background image excluding the region image by performing an image segmentation on an image frame in a video to be processed;
a mirror processing unit 902 configured for determining a mirror image corresponding to the region image ;
a first extending unit 903 configured for obtaining at least one first extended image by extending the region image in a first extension direction, the at least one first extended image comprising the region image;
a second extending unit 904 configured for obtaining at least one second extended image by extending the mirror image in a second extension direction, the first extension direction being different from the second extension direction;
an image rendering unit 905 configured for obtaining a target rendered image by rendering the background image, the at least one second extended image and the at least one first extended image, the target rendered image being the image obtained at the end of the rendering;
a video synthesis unit 906 configured for obtaining a target video corresponding to the video to be processed by performing a video synthesis on the target rendered image corresponding to the image frame.

As an embodiment, the first extending unit may include:
a velocity determination module configured for determining a displacement velocity of the target object in the image frame;
a first extending module configured for obtaining at least one forward displacement point comprising an original position point of the region image by performing a displacement processing on the original position point according to the displacement velocity and the first extension direction;
a first determination module configured for obtaining a first extended images respectively corresponding to the region image at the at least one forward displacement point by copying the region image to the forward displacement point.

In some embodiments, the first extending module may include:
a first determination sub-module configured for determining a region width of the region image and an image width of the image frame;
a first computing sub-module configured for computing, based on the region width and the image width and the displacement velocity, the number of forward displacements and a forward offset step size of the region image in the first extension direction;
a forward displacement sub-module configured for determining, based on the original position point of the region image, at least one forward position point according to the forward offset step size and the number of forward displacements, to obtain the at least one forward displacement point constructed by the original position point and the at least one forward position point.

As an embodiment, the second extending unit may include:
a velocity determination module configured for determining a displacement velocity of the target object in the image frame ;
a second extending module configured for obtaining at least one reverse displacement point corresponding to an original position point of the region image by performing a displacement processing on the original position point based on the displacement velocity and the second extension direction;
a second determining module configured for obtaining a second extended image respectively corresponding to the mirror image at the at least one reverse displacement point by copying the mirror image to the reverse displacement point.

In some embodiments, the second extending module includes:
a second determination sub-module configured for determining a region width of the region image and an image width of the image frame;
a second computing sub-module configured for computing, based on the region width and the image width and the displacement velocity, the number of reverse displacements and a reverse offset step size of the region image in the second extension direction;
a reverse displacement sub-module configured for determining, based on the original position point of the region image, at least one reverse position point according to the reverse offset step size and the number of reverse displacements to obtain the at least one reverse displacement point constructed by the at least one reverse position point.

In some embodiments, the velocity determination module comprises:
a third determining module configured for determining a previous image frame corresponding to the image frame in the video to be processed ;
a fourth determination module configured for determining a first position of the target object in the previous image frame and a second position of the target object in the image frame;
a displacement computing module configured for computing an amount of displacement corresponding to the target object based on the first position and the second position ;
a velocity computing module configured for computing the displacement velocity of the target object in the image frame using a display time interval of the image frame of the video to be processed and the amount of displacement.

In some embodiments, the image rendering unit may include:
a sequence rendering module configured for obtaining the target rendered image at the end of the rendering by successively rendering the background image, the at least one first extended image, the at least one second extended image in an overlay way, with the background image in a first rendering order, the at least one second extended image in a second rendering order and the at least one first extended image in a third rendering order.

In some embodiments, the sequence rendering module comprises:
a first rendering module configured for rendering the background image at a lowest layer;
a first distance module configured for determining reverse central distances which respectively correspond to the at least one second extended image and a center point of the background image ;
a second rendering module configured for successively rendering the at least one second extended image in a descending order of the reverse central distances;
a second distance module configured for determining forward central distances which respectively correspond to the at least one first extended image and the center point of the background image ;
a second rendering module configured for successively rendering the at least one first extended image in a descending order of the forward central distances until the end of rendering of a last first extended image, to obtain the target rendered image.

As yet another embodiment, the apparatus further comprises:
a sticker obtaining unit configured for obtaining a sticker image selected by a user for the target object;
a position determination unit configured for determining a sticker position of the sticker image in the image frame based on an original position point of the region image in the image frame;
an image sticker unit configured for obtaining a target sticker image by rendering the sticker image to the target rendered image according to the sticker position;
a sticker video unit configured for obtaining a target sticker video corresponding to the video to be processed by performing a video synthesis on the target sticker image corresponding to the image frame.

In some embodiments, the image segmentation unit includes:
an image extracting module configured for extracting the image frame from the video to be processed;
a region identifying module configured for identifying an object contour area of the target object in the image frame ;
an image segmentation module configured for obtaining the region image corresponding to the object contour area and the background image excluding the region image by segmenting the image frame with the object contour area.

In some embodiments, the apparatus further includes:
a video obtaining unit configured for obtaining the video to be processed based on a target video collection request triggered by a first user;
a video outputting unit configured for outputting the target video for the first user.

As another embodiment, the apparatus can further include:
a post detection unit configured for detecting a post request for the target video triggered by the first user;
a request response unit configured for in response to the post request, posting the target video to a user video account of the first user for reading and playing by a second user equipment of a second user.

In some embodiments, the video obtaining unit includes:
a video receiving module configured for receiving the video to be processed sent by the first user equipment, the video to be processed being captured by the user equipment of the first user when the user triggers the target video collection request;
a video output unit comprising:
a video sending module configured for sending the target video to the first user equipment and controlling the first user equipment to play the target video.

The apparatus provided in this embodiment may be used to execute the technical solutions of the foregoing method embodiments, and implementation principles and technical effects of the apparatus are similar, and are not repeatedly described herein in this embodiment.

In order to realize the described embodiments, embodiments of the present disclosure further provide an electronic device.

Reference is made to FIG. 10, which shows a schematic diagram of an electronic device 1000 suitable for implementing embodiments of the disclosure. The electronic device 1000 may be a terminal device or a server. The terminal device may include, but not limited to, digital terminals, such as, a mobile phone, a laptop computer, a digital broadcast receiver, a personal digital assistant (PDA), a portable android device (PAD), a portable media player (PMP), a vehicle terminal (such as, an on-board navigation terminal) and the like, and fixed terminals, such as, a digital TV, a desktop computer and the like. The electronic device shown in FIG. 10 is only an example and should not bring any limitation on the functionality and use scope of the disclosure.

As shown in FIG. 10, the electronic device 1000 may include a processing device (e. g., a central processing unit, a graphics processing unit, etc. ) 1001 that may perform various suitable acts and processes in accordance with program(s) stored in a read only memory (ROM) 1002 or program(s) loaded from a storage device 1008 to a random access memory (RAM) 1003. There are various programs and data required for operation(s) of the electronic device 1000 stored in the RAM 1003. The processing unit 1001, the ROM 1002 and the RAM 1003 may be interconnected with each other via a bus 1004. An input/output (I/O) interface 1005 is also connected to the bus 1004.

Generally, the following devices can be connected to the I/O interface 1005: an input device 1006 including, for example, a touch screen, a touchpad, a keyboard, a mouse, a camera, a microphone, an accelerometer, a gyroscope and the like; an output device 1007 including, for example, a liquid crystal display (LCD), a speaker, a vibrator and the like; a storage device 1008 including, for example, a tap or a hard disk; and a communication device. The communication device 1009 may allow the electronic device 1000 to communicate wirelessly or wired with other devices to exchange data. Although FIG. 10 shows an electronic device 1000 with various devices, it should be understood that it is not required to implement or have all of the devices shown. More or fewer devices may be implemented or possessed instead.

In particular, according to embodiments of the disclosure, the process described with the reference to the above flow chart may be implemented as a computer software program. For example, embodiments of the disclosure include a computer program product that includes a computer program carried on a computer readable medium that contains program codes for performing a method shown in the flow chart. In such embodiments, the computer program may be downloaded and installed from a network via the communication device 1009, or from the storage device 1008, or from the ROM 1002. When the computer program is executed by the processing device 1001, the above functions defined in methods of the disclosure are performed.

Embodiments of the present disclosure also include a computer program. When the computer program is running by a processor, the above functions described in methods according to embodiments of the present discourse are implemented.

It shall be noted that the computer readable medium of the disclosure may be a computer readable signal medium or a computer readable storage medium or any combination of the two. A computer readable storage medium, for example, may be, but is not limited to, an electrical, magnetic, optical, electromagnetic, infrared, or semiconductor system, device, or equipment, or any combination of the above. More specific examples of computer readable storage media may include but are not limited to: an electrical connection with one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the above. For purposes of this disclosure, the computer readable storage medium may be any tangible medium containing or storing a program that may be used by or in combination with an instruction executing system, device, or a device. In the disclosure, however, the computer-readable signal medium may include a data signal propagated in a baseband or as part of a carrier that carries the computer-readable program code. Such propagated data signals may take many forms, including but not limited to electromagnetic signals, optical signals, or any suitable combination of the above. The computer-readable signal medium may also be any computer-readable medium other than the computer-readable storage medium that may send, propagate or transmit a program intended for use by or in combination with an instruction executing system, device or equipment. The program code contained on the computer readable medium may be transmitted in any appropriate medium, including but not limited to: an electrical wire, an optical cable, radio frequency (RF), and the like, or any suitable combination of the above.

The computer readable medium may be included in the above mentioned electronic device. Alternatively, the computer readable medium may stand alone and not be incorporated into the electronic device.

The computer readable medium may carry one or more programs which, when executed by the electronic device, causes the electronic device to perform the method shown in above embodiments.

Computer program code for performing operations of the disclosure may be written in one or more programming languages or combinations thereof, including object-oriented programming languages such as Java, Smalltalk, C++, and conventional procedural programming languages such as the "C" language or similar programming languages. The program code may be executed entirely on the user's computer, partly on the user's computer, as a stand-alone software package, partly on the user's computer and partly on a remote computer, or entirely on a remote computer or server. In the case involving a remote computer, the remote computer may be connected to the user computer over any kind of Network, including a local area network (LAN) or a wide area network (WAN), can be connected to an external computer (e.g., using an Internet service provider to connect over the Internet).

The flow charts and block diagrams in the drawings illustrate the possible implementations of architecture, functions, and operations of the systems, methods, and computer program products in accordance with various embodiments of the disclosure. In this regard, each box in the flow charts or block diagrams may represent a module, a program segment, or a part of code that contains one or more executable instructions for implementing a specified logical function. It should also be noted that in some alternative implementations, the functions indicated in the boxes may also occur in a different order than those indicated in the accompanying diagram. For example, two boxes represented one after another can actually be executed basically in parallel, and they can sometimes be executed in reverse order, depending on the function involved. Note also that each of the boxes in the block diagram and/or flowchart, and the combination of the boxes in the block diagram and/or flowchart, can be implemented with a dedicated hardware-based system that performs the specified function or operation, or with a combination of dedicated hardware and computer instructions.

Units involved in the description of embodiments described herein may be implemented either by means of software or by means of hardware. The name of the unit does not limit the unit itself in certain circumstances, for example, the first obtaining unit may also be described as "a unit that obtains at least 2 Internet protocol addresses."

The functions described herein can be performed, at least in part, by one or more hardware logical units. For example, non-restrictively, demonstration types of hardware logic parts that can be used may include: a field programmable gate array (FPGA), an application specific integrated circuit (ASIC), an application specific standard parts (ASSP), a system on Chip (SOC), a complex programmable logic device (CPLD), and the like.

In the context of the disclosure, a machine-readable medium may be a tangible medium that may contain or store a program for use by or in conjunction with an instruction executing system, equipment or device. The machine-readable medium may be a machine-readable signaling medium or a machine-readable storage medium. The machine-readable media may include, but are not limited to, electronic, magnetic, optical, electromagnetic, infrared, or semiconductor systems, apparatus, or devices, or any suitable combination of the above. More specific examples of machine-readable storage media would include electrical connections based on one or more wires, portable computer disks, hard disks, random access memory (RAM), read-only memory (ROM), erasable programmable read-only memory (EPROM or flash memory), optical fibers, convenient compact disk read-only memory (CD-ROM), optical storage devices , magnetic storage devices, or any suitable combination of the above.

In a first aspect, according to one or more embodiments of the present disclosure, a method for synthesizing a target video is provided, including:
obtaining a region image corresponding to a target object and a background image excluding the region image by performing an image segmentation on an image frame in a video to be processed;
determining a mirror image corresponding to the region image;
obtaining at least one first extended image by extending the region image in a first extension direction, the at least one first extended image comprising the region image;
obtaining at least one second extended image by extending the mirror image in a second extension direction, the first extension direction being different from the second extension direction;
obtaining a target rendered image by rendering the background image, the at least one second extended image and the at least one first extended image, the target rendered image being the image obtained at the end of the rendering ;
obtaining a target video corresponding to the video to be processed by performing a video synthesis on the target rendered image corresponding to the image frame.

According to one or more embodiments of the present disclosure, obtaining at least one first extended image by extending the region image in a first extended direction includes:
determining a displacement velocity of the target object corresponding to the image frame;
obtaining at least one forward displacement point comprising an original position point of the region image by performing a displacement processing on the original position point according to the displacement velocity and the first extension direction;
obtaining a first extended images respectively corresponding to the region image at the at least one forward displacement point by copying the region image to the forward displacement point.

According to one or more embodiments of the present disclosure, obtaining at least one forward displacement point comprising an original position point of the region image by performing a displacement processing on the original position point according to the displacement velocity and the first extension direction includes:
determining a region width of the region image and an image width of the image frame;
computing, based on the region width and the image width and the displacement velocity, the number of forward displacements and a forward offset step size of the region image in the first extension direction;
determining, based on the original position point of the region image, at least one forward position point according to the forward offset step size and the number of forward displacements, to obtain the at least one forward displacement point constructed by the original position point and the at least one forward position point.

According to one or more embodiments of the present disclosure, obtaining at least one second extended image by extending the mirror image in a second extended direction includes:
determining a displacement velocity of the target object corresponding to the image frame;
obtaining at least one reverse displacement point corresponding to an original position point of the region image by performing a displacement processing on the original position point based on the displacement velocity and the second extension direction;
obtaining a second extended image respectively corresponding to the mirror image at the at least one reverse displacement point by copying the mirror image to the reverse displacement point.

According to one or more embodiments of the present disclosure obtaining at least one reverse displacement point corresponding to an original position point of the region image by performing a displacement processing on the original position point based on the displacement velocity and the second extension direction includes:
determining a region width of the region image and an image width of the image frame;
computing, based on the region width and the image width and the displacement velocity, the number of reverse displacements and a reverse offset step size of the region image in the second extension direction;
determining, based on the original position point of the region image, at least one reverse position point according to the reverse offset step size and the number of reverse displacements to obtain the at least one reverse displacement point constructed by the at least one reverse position point.

According to one or more embodiments of the present disclosure, determining a displacement velocity of the target object in the image frame includes:
determining a previous image frame corresponding to the image frame in the video to be processed;
determining a first position of the target object in the previous image frame and a second position of the target object in the image frame;
computing an amount of displacement corresponding to the target object based on the first position and the second position;
computing and obtaining the displacement velocity of the target object in the image frame using a display time interval of the image frame of the video to be processed and the amount of displacement .

According to one or more embodiments of the present disclosure, rendering the background image, the at least one second extended image, and the at least one first extended image to obtain a target rendered image at the end of the rendering includes:
obtaining the target rendered image at the end of the rendering by successively rendering the background image, the at least one first extended image, the at least one second extended image in an overlay way, with the background image in a first rendering order, the at least one second extended image in a second rendering order and the at least one first extended image in a third rendering order.

According to one or more embodiments of the present disclosure, obtaining the target rendered image at the end of the rendering by successively rendering the background image, the at least one first extended image, the at least one second extended image in an overlay way includes:
rendering the background image at a lowest layer;
determining reverse central distances which respectively correspond to the at least one second extended image and a center point of the background image;
successively rendering the at least one second extended image in a descending order of the reverse central distances;
determining forward central distances which respectively correspond to the at least one first extended image and the center point of the background image;
successively rendering the at least one first extended image in a descending order of the forward central distances until the end of rendering of a last first extended image, to obtain the target rendered image.

According to one or more embodiments of the present disclosure, after rendering the background image, the at least one second extended image and the at least one first extended image to obtain a target rendered image at the end of the rendering, the method further includes:
obtaining a sticker image selected by a user for the target object;
determining a sticker position of the sticker image in the image frame based on an original position point of the region image in the image frame;
obtaining a target sticker image by rendering the sticker image to the target rendered image according to the sticker position;
obtaining a target sticker video corresponding to the video to be processed by performing a video synthesis on the target sticker image corresponding to the image frame.

According to one or more embodiments of the present disclosure, obtaining a region image corresponding to a target object and a background image excluding the region image by performing an image segmentation on an image frame in a video to be processed includes:
extracting the image frame from the video to be processed;
identifying an object contour area of the target object in the image frame;
obtaining the region image corresponding to the object contour area and the background image excluding the region image by segmenting the image frame with the object contour area.

According to one or more embodiments of the present disclosure, the method further includes:
obtaining the video to be processed based on a target video collection request triggered by a first user;
where after the obtaining a target video corresponding to the video to be processed by performing a video synthesis on the target rendered image corresponding to the image frame, the method further comprises:
outputting the target video for the first user.

According to one or more embodiments of the present disclosure, after the outputting the target video for the first user, the method further includes:
detecting a post request for the target video triggered by the first user;
in response to the post request, posting the target video to a user video account of the first user for reading and playing by a second user equipment of a second user.

According to one or more embodiments of the present disclosure, obtaining the video to be processed based on a target video collection request triggered by a first user includes:
receiving the video to be processed sent by the first user equipment, the video to be processed being captured by the user equipment of the first user when the user triggers the target video collection request;
where the outputting the target video for the first user comprising:
   sending the target video to the first user equipment and controlling the first user equipment to play the target video.

In a second aspect, according to one or more embodiments of the present disclosure, an apparatus for video synthesis is provided, including:
an image segmentation unit configured for obtaining a region image corresponding to a target object and a background image excluding the region image by performing an image segmentation on an image frame in a video to be processed;
a mirror processing unit configured for determining a mirror image corresponding to the region image;
a first extending unit configured for obtaining at least one first extended image by extending the region image in a first extension direction, the at least one first extended image comprising the region image;
a second extending unit configured for obtaining at least one second extended image by extending the mirror image in a second extension direction, the first extension direction being different from the second extension direction;
an image rendering unit configured for obtaining a target rendered image by rendering the background image, the at least one second extended image and the at least one first extended image, the target rendered image being the image obtained at the end of the rendering;
a video synthesis unit configured for obtaining a target video corresponding to the video to be processed by performing a video synthesis on the target rendered image corresponding to the image frame.

According to a third aspect, according to one or more embodiments of the present disclosure, there is provided an electronic device, including: at least one processor and a memory;
the memory storing computer execution instructions;
the at least one processor executing the computer execution instructions stored in the memory to cause the at least one processor to execute video synthesis methods of various possible designs of the first aspect and the first aspect.

In a fourth aspect, according to one or more embodiments of the present disclosure, a computer-readable storage medium is provided. The computer readable storage medium stores computer execution instructions which, when a processor executes the computer execution instructions, implement the video synthesis method of the first aspect and various possible designs of the first aspect.

In a fifth aspect, according to one or more embodiments of the present disclosure, there is provided a computer program product, including a computer program. When being executed by a processor, the computer program implements a video synthesis method of various possible designs of the first aspect and the first aspect.

In a sixth aspect, embodiments of the present disclosure further provide a computer program. When being run by a processor, the computer program implements the video synthesis method of the first aspect and various possible designs of the first aspect.

The above description is only a better understanding of the disclosure and an explanation of the technical principles used. It should be understood by those skilled in the art that the scope of the disclosure is not limited to technical solutions resulting from a particular combination of the aforesaid technical features, but shall also cover other technical solutions resulting from any combination of the aforesaid technical features or their equivalents without being separated from the aforesaid disclosed ideas. For example, the technical scheme formed by the substitution of the above features with the technical features disclosed in this disclosure (but not limited to) having similar functions.

In addition, although operations are described in a particular order, this should not be construed as requiring that those operations be performed in the particular order shown or in a sequential order. In certain circumstances, multitasking and parallel processing may be advantageous. Again, although certain implementation details are included in the above discussion, these should not be interpreted as limiting the scope of this disclosure. Certain features described in the context of individual embodiments may also be realized in combination in a single embodiment. Conversely, various features described in the context of a single embodiment may also be realized in multiple embodiments individually or in any suitable sub combination.

Although the subject matter has been described in language specific to structural features and/or methodological logical actions, it should be understood that the subject matter defined in the attached claims is not necessarily limited to the specific features or actions described above. Rather, the specific features and actions described above are merely example forms of implementing the claims.

## Claims

1. A method of video synthesis, comprising:
obtaining a region image corresponding to a target object and a background image excluding the region image by performing an image segmentation on an image frame in a video to be processed;
determining a mirror image corresponding to the region image;
obtaining at least one first extended image by extending the region image in a first extension direction, the at least one first extended image comprising the region image;
obtaining at least one second extended image by extending the mirror image in a second extension direction, the first extension direction being different from the second extension direction;
obtaining a target rendered image by rendering the background image, the at least one second extended image and the at least one first extended image , the target rendered image being the image obtained at the end of the rendering;
obtaining a target video corresponding to the video to be processed by performing a video synthesis on the target rendered image corresponding to the image frame.

2. The method of claim 1, wherein the obtaining at least one first extended image by extending the region image in a first extended direction comprises:
determining a displacement velocity of the target object in the image frame;
obtaining at least one forward displacement point comprising an original position point of the region image by performing a displacement processing on the original position point according to the displacement velocity and the first extension direction;
obtaining a first extended images respectively corresponding to the region image at the at least one forward displacement point by copying the region image to the forward displacement point.

3. The method of claim 2, wherein the obtaining at least one forward displacement point comprising an original position point of the region image by performing a displacement processing on the original position point according to the displacement velocity and the first extension direction comprises:
determining a region width of the region image and an image width of the image frame;
computing, based on the region width and the image width and the displacement velocity, the number of forward displacements and a forward offset step size of the region image in the first extension direction;
determining, based on the original position point of the region image, at least one forward position point according to the forward offset step size and the number of forward displacements, to obtain the at least one forward displacement point constructed by the original position point and the at least one forward position point.

4. The method of claim 1, wherein the obtaining at least one second extended image by extending the mirror image in a second extended direction comprises:
determining a displacement velocity of the target object in the image frame;
obtaining at least one reverse displacement point corresponding to an original position point of the region image by performing a displacement processing on the original position point based on the displacement velocity and the second extension direction;
obtaining a second extended image respectively corresponding to the mirror image at the at least one reverse displacement point by copying the mirror image to the reverse displacement point.

5. The method of claim 4, wherein the obtaining at least one reverse displacement point corresponding to an original position point of the region image by performing a displacement processing on the original position point based on the displacement velocity and the second extension direction comprises:
determining a region width of the region image and an image width of the image frame;
computing, based on the region width and the image width and the displacement velocity, the number of reverse displacements and a reverse offset step size of the region image in the second extension direction;
determining, based on the original position point of the region image, at least one reverse position point according to the reverse offset step size and the number of reverse displacements to obtain the at least one reverse displacement point constructed by the at least one reverse position point.

6. The method of claim 2 or 3, wherein the determining a displacement velocity of the target object in the image frame comprises:
determining a previous image frame corresponding to the image frame in the video to be processed;
determining a first position of the target object in the previous image frame and a second position of the target object in the image frame;
computing an amount of displacement corresponding to the target object based on the first position and the second position;
computing the displacement velocity of the target object in the image frame using a display time interval of the image frame of the video to be processed and the amount of displacement.

7. The method of any of claims 1-6, wherein the rendering the background image, the at least one second extended image, and the at least one first extended image to obtain a target rendered image at the end of the rendering comprises:
obtaining the target rendered image at the end of the rendering by successively rendering the background image, the at least one first extended image, the at least one second extended image in an overlay way, with the background image in a first rendering order, the at least one second extended image in a second rendering order and the at least one first extended image in a third rendering order.

8. The method of claim 7, wherein the obtaining the target rendered image at the end of the rendering by successively rendering the background image, the at least one first extended image, the at least one second extended image in an overlay way comprises:
rendering the background image at a lowest layer;
determining reverse central distances which respectively correspond to the at least one second extended image and a center point of the background image;
successively rendering the at least one second extended image in a descending order of the reverse central distances;
determining forward central distances which respectively correspond to the at least one first extended image and the center point of the background image;
successively rendering the at least one first extended image in a descending order of the forward central distances until the end of rendering of a last first extended image, to obtain the target rendered image.

9. The method of any of claims 1-6, wherein after rendering the background image, the at least one second extended image and the at least one first extended image to obtain a target rendered image at the end of the rendering, the method further comprises:
obtaining a sticker image selected by a user for the target object;
determining a sticker position of the sticker image in the image frame based on an original position point of the region image in the image frame;
obtaining a target sticker image by rendering the sticker image to the target rendered image according to the sticker position;
obtaining a target sticker video corresponding to the video to be processed by performing a video synthesis on the target sticker image corresponding to the image frame.

10. The method of any of claims 1-9, wherein the obtaining a region image corresponding to a target object and a background image excluding the region image by performing an image segmentation on an image frame in a video to be processed comprises:
extracting the image frame from the video to be processed;
identifying an object contour area of the target object in the image frame;
obtaining the region image corresponding to the object contour area and the background image excluding the region image by segmenting the image frame with the object contour area.

11. The method of any of claims 1-10, wherein the method further comprises:
obtaining the video to be processed based on a target video collection request triggered by a first user;
wherein after the obtaining a target video corresponding to the video to be processed by performing a video synthesis on the target rendered image corresponding to the image frame, the method further comprises:
outputting the target video for the first user.

12. The method of claim 11, wherein after the outputting the target video for the first user, the method further comprises:
detecting a post request for the target video triggered by the first user;
in response to the post request, posting the target video to a user video account of the first user for reading and playing by a second user equipment of a second user.

13. The method of claim 11, wherein the obtaining the video to be processed based on a target video collection request triggered by a first user comprises:
receiving the video to be processed sent by the first user equipment, the video to be processed being captured by the user equipment of the first user when the user triggers the target video collection request;
wherein the outputting the target video for the first user comprising:
sending the target video to the first user equipment;
controlling the first user equipment to play the target video.

14. An apparatus for video synthesis, comprising:
an image segmentation unit configured for obtaining a region image corresponding to a target object and a background image excluding the region image by performing an image segmentation on an image frame in a video to be processed;
a mirror processing unit configured for determining a mirror image corresponding to the region image;
a first extending unit configured for obtaining at least one first extended image by extending the region image in a first extension direction, the at least one first extended image comprising the region image;
a second extending unit configured for obtaining at least one second extended image by extending the mirror image in a second extension direction, the first extension direction being different from the second extension direction;
an image rendering unit configured for obtaining a target rendered image by rendering the background image, the at least one second extended image and the at least one first extended image, the target rendered image being the image obtained at the end of the rendering;
a video synthesis unit configured for obtaining a target video corresponding to the video to be processed by performing a video synthesis on the target rendered image corresponding to the image frame.

15. An electronic device, comprising: a processor and a memory;
the memory storing computer execution instructions; and
the processor executing the computer execution instructions stored in the memory to cause the processor to be configured with a method of video synthesis of any of claims 1-13.

16. A computer readable storage medium, wherein the computer readable storage medium stores computer execution instructions which, when a processor executes the computer execution instructions, implement a method of video synthesis of any of claims 1-13.

17. A computer program product, comprising a computer program, wherein the computer program performs, when being executed by a processor, a method of video synthesis of any of claims 1-13.

18. A computer program which, when executed by a processor, implements a method of as claimed in any of claims 1-13.
